# DEMANDE DE BREVET EUROPEEN

(11) **EP 0 728 596 A1**
(43) Date de publication de la demande: **28.08.1996**
(21) Numéro de dépôt: 95500021.1
(22) Date de dépôt: 24.02.1995
(51) Int. Cl.: B60B 27/02, B62K 25/00

(54) **Mécanisme de serrage rapide pour bicyclette**

(71) Demandeur: Guerra Navas, Antonio, E-01007 Vitoria (ES)
(72) Inventeur: Guerra Navas, Antonio, E-01007 Vitoria (ES)
(74) Mandataire: Urizar Barandiaran, Miguel Angel

(57) **Abrégé**

Mécanisme de serrage rapide pour bicyclette, comportant un dispositif (104) creux doté de trous transversaux (0) associé intérieurement au moyeu (127); d'un axe de serrage (102) à rabats périphériques (r) de logement de billes (101) et logeant à l'intérieur du dispositif (104); de moyens mécaniques (105), (106) en vue de déplacer/retenir axialement l'axe de serrage (102) sur le dispositif (104) en donnant lieu à volonté à l'apparition/escamotage des billes (c) par les trous (0), en permettant la retenue/libération du disspositif (104) par rapport à l'essieu (111) de la roue dans lequel sont logés; moyens manuels de réglage du dispositif (104) par rapport à l'essieu (111) de la roue.

## Description

On connaît bien les mécanismes assurant le montage comme l'association des moyeux à l'axe de la roue de la bicyclette.

On n'ignore pas qu'il se produit du jeu, dans ce genre de dispositif de serrage, lors du montage de ses élements, et, plus tard, à l'usage de la bicylette, ce qui ne manque pas de provoquer des ennuis des plus indésirables, s'agissant d'un élément de roulement tel qu'une roue de bicylette.

L'objet de l'invention est de développer un dispositif de serrage permettant de régler sans qu'il y ait de jeu, et au bon vouloir de l'utilisateur, les éléments de serrage, soit lors du montage, soit ultérieurement, en cas de déréglage provenant de l'utilisation, en procédant à un réglage manuel par léger déplacement axial entre le système de serrage par rapport à l'essieu de la roue.

La figure 1 consiste en un éclatement isométrique de l'ensemble des pièces composant une réalisation pratique du mécanisme de serrage rapide, faisant l'objet de l'invention.

La figure 2 consiste en une vue éclatée d'une autre réalisation pratique du mécanisme faisant l'objet de l'invention.

Elle part de la fixation du moyeu (127), lequel se retrouve axialement solidaire du serrage (104) et de l'essieu (111) de la roue au moyen des billes de vissage (101), lesquelles demeurent logées à l'intérieur de l'essieu (111) de la roue, en assurant ainsi une parfaite mise en place de celle-ci.

Le dispositif (104) est logé à l'intérieur du moyeu (127) auquel il est retenu par la rondelle (108) dans l'embase (a). L'axe (102) est logé à l'intérieur du dispositif, la fonction du premier étant de faire ressortir ou non les billes (101) à travers les trous (0) de serrage (104), en fonction de leur position relative. Ceci provient du fait que l'axe en question (102) comporte un rabat (r) destiné à loger les billes (101). Dès lors que l'axe (102) se déplace en sens axial par rapport au dispositif (104), les billes (101) sont contraintes de sortir de leur logement dans le rabat (r) afin d'aller se placer sur le plus grand diamètre de l'axe, en devant, de la sorte, ressortir à travers les trous (0) de serrage (104). Dans la mesure où ledit dispositif (104) se loge à l'intérieur de l'axe avant ou arrière de la roue (111), les billes (101) en ressortant font butée avec leur logement sur un rabat disposé à l'intérieur des axes (111). Le moyeu (127) se trouve de la sorte parfaitement serré, avec l'ensemble des pièces de serrage, à l'axe avant ou arrière en empêchant tout déplacement dans la direction axiale.

Le bouton-poussoir (106) se trouve vissé en bout d'axe de serrage (102). Sa fonction est de déplacer en direction axiale l'axe de serrage (102) par rapport au dispositif (104) en vue de faire coincider les rabats (r) de l'axe avec les trous (0) de la fermeture. De sorte que les billes (101) aillent loger dans lesdits rabats (r) en restant au ras des trous (0) de serrage. Quand l'action sur le bouton-poussoir (106) cesse, l'axe de serrage (102) revient en position normale du fait de l'action du ressort (105). Les billes (101), dans cette position, sont forcées de sortir des rabats (r), et apparaissent à travers les trous (0) du dispositif (104).

Sur le moyeu (127) s'appuie la molette (128) contre l'action du ressort (139). Sur cette roulette repose l'extrémité (t) du dispositif (104). Le contact du moyeu avec cette molette consiste en une surface dentée (d) servant de rochet. En tournant la molette (128) au moyen d'un papillon (138), on parvient à séparer à volonté la molette (128) par rapport au moyeu (127). On parvient de la sorte à déplacer légèrement le dispositif (104) en sens axial, ce qui permet d'ajuster parfaitement la position des billes de serrage (101) par rapport à leur butée à l'intérieur des axes avant ou arrière (111). Grâce à quoi, on évite d'éventuels jeux de la roue en direction axiale.

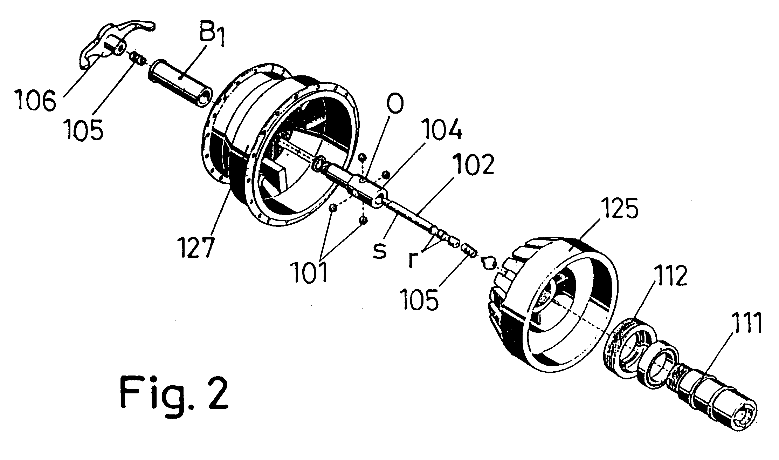

Dans la variante de la figure 2, on dispose un serrage de réglage (B1) relié au moyeu (127) et vissé au dispositif (104).

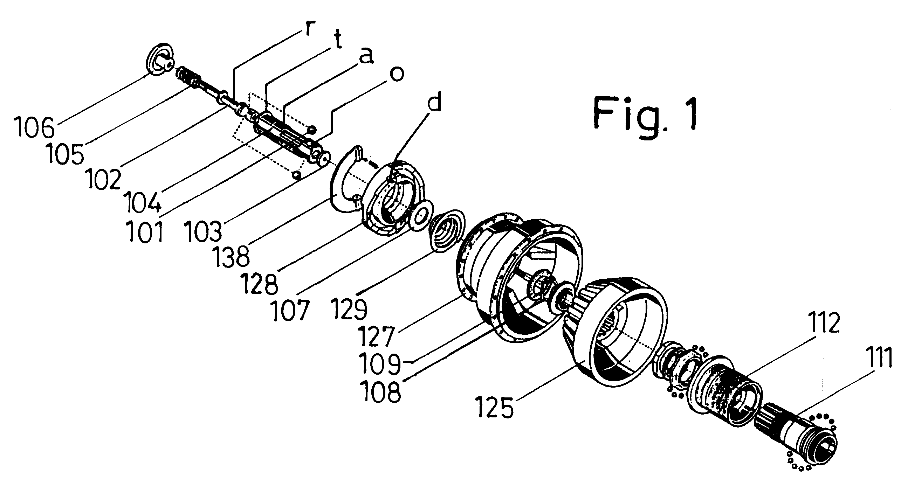

L'axe (102), ses rabats (r), billes (101), trous (0) de serrage (104), logement du dispositif (104) sur l'essieu (111) de la bicyclette, etc., est identique à celui déjà expliqué pour la variante de la figure 1.

Vissée à un extrême de l'axe de serrage (102) se trouve le papillon (106). Sa fonction consiste à faire tourner le dispositif (104) par rapport au système de réglage (B1) de sorte que l'ensemble de ces serrages puissent s'allonger ou se raccourcir suivant le bon vouloir de l'utilisateur, afin d'éviter d'éventuels jeux dans la roue. Pour ce faire, la surface extérieure (s) de l'axe de blocage (102) vient s'emboîter dans la surface intérieure du dispositif (104), sans qu'il soit possible de le faire tourner, par exemple, les deux surfaces présentant à cet égard une section polygonale.

Ce papillon (E) peut, en outre, déplacer en direction axiale l'axe de blocage (102) par rapport aux dispositifs (104) et (B1) où il va se loger. Il déplace ainsi les rabats (r) de l'axe (102) par rapport aux trous (0) de serrage (104) en faisant en sorte que les billes (c) ressortent ou non à travers ces trous en fonction de leur position. Les ressorts (105) situés des deux côtés de l'axe (102) permettent de s'assurer que les billes, en position de repos, ressortent toujours par les trous (0) de serrage (104) d'une manière similaire à celle décrite auparavant.

Ce mécanisme est identique pour les roues avant et arrière, à l'exception du fait que pour cette dernière on monte l'essieu arrière (111). Cet essieu possède un filetage sur sa partie postérieure, en vue d'y placer les plateaux dentés de la bicyclette.

Le tambour (125) est vissé aux essieux avant et arrière (111). C'est lui qui est chargé de la transmission de la rotation à la roue et de servir de superficie de freinage. Il loge à cet effet intérieurement les freins à tambour.

L'ensemble des mécanismes qui nous venons de définir sont assujettis aux supports avant et arrière à l'aide de deux roulements (112). Ces roulements, qui embrassent les essieux (111) permettent la rotation de l'ensemble de la roue par rapport à ses supports avant et arrière.

## Revendications

1. Mécanisme de serrage rapide pour bicyclette, se caractérisant par le fait qu'il comporte:
a) un dispositif (104) creux comportant des trous transversaux (0) logé à l'intérieur du moyeu (127) auquel il se trouve associé;
b) un axe de serrage (102) comportant des rabats périphériques (r) de logements de billes (101) et qui va loger à l'intérieur du dispositif (104);
c) un essieu (111) de roue qui loge axialement le dispositif (104) et dispose d'un logement interne pour les billes (c);
d) moyens de réglage manuels du dispositif (104) par rapport à l'essieu (111) de la roue;
e) moyens mécaniques (105), (106) en vue de déplacer/retenir axialement l'axe de serrage (102) sur le dispositif (104) en provoquant à volonté l'apparition/escamotage des billes (c) par les trous (0), de manière à autoriser la retenue/libération du dispositif de serrage (104) par rapport à l'essieu (111) de la roue.

2. Mécanisme de serrage rapide pour bicyclette, suivant revendication antérieure, se caractérisant par le fait que les moyens mécaniques (105), (106) pour déplacer/retenir axialement l'axe de serrage (102) (sur le dispositif) comporte un bouton-poussoir (106) vissé à l'axe de serrage (102) et au moins un ressort (105) entre bouton-poussoir (106) et dispositif (104) tendant à placer l'axe de serrage (102) dans la position de rétention avec les billes (c) faisant leur apparition par les trous (c).

3. Mécanisme de serrage rapide pour bicyclette, suivant revendications antérieures, se caractérisant par le fait que les moyens de réglage consistent dans le fait que l'on dispose sur le moyeu (127) de manière coaxiale et contre l'action d'un ressort, une molette (128) qui s'enfile sur le moyeu (127) à la manière d'un rochet, une butée (t) du dispositif (104) venant s'appuyer sur la molette (128) de manière que la rotation de la molette (128) entraîne un déplacement axial du dispositif de serrage (104).

4. Mécanisme de serrage rapide pour bicyclette suivant revendications 1 et 2, se caractérisant par le fait que les moyens de réglage consistent en ce qu'ils disposent d'un dispositif de réglage (B1) associé au moyeu (127) et qui va se loger à l'intérieur, associé par filetage au dispositif (104) sachant que l'axe de serrage (102) ne peut tourner par rapport du dispositif (104), de sorte que la rotation de l'axe de serrage (102) donne lieu à un déplacement axial du dispositif (104) par rapport au moyeu (127).
